# EUROPÄISCHE PATENTANMELDUNG

(11) **EP 0 745 472 A2**
(43) Veröffentlichungstag der Anmeldung: **04.12.1996**
(21) Anmeldenummer: 96108164.3
(22) Anmeldetag: 22.05.1996
(51) Int. Cl.: B29C 49/32

(54) **Blasmaschine für die Herstellung von Hohlkörpern aus Kunststoff**

(30) Priorität: 29.05.1995 DE 29508864 U
(71) Anmelder: BEKUM Maschinenfabriken GmbH, D-12107 Berlin (DE)
(72) Erfinder: Carr, Gary, Okemos, Michigan, 48864 (US)
(74) Vertreter: Flosdorff, Jürgen, Dr.

(57) **Zusammenfassung**

Die Blasmaschine für die Herstellung von Hohlkörpern aus Kunststoff, die in einer Schlauchstation (I) mit mehreren parallel nebeneinanderliegenden Schlauchköpfen (1,10) oder einer Schlauchkopfbatterie Vorformlinge erzeugt, mit denen in dieser Station eine in ein Schließsystem integrierte Blasform (4,40) mit mehreren, der Zahl der Vorformlinge entsprechenden Kavitäten (5,50) gefüllt wird, die in einer versetzt zur Schlauchstation liegenden Blasstation (II) in der geschlossenen Blasform (4,40) zu Hohlkörpern aufgeblasen werden, ist so ausgebildet, daß die Blasform in mindestens zwei dicht nebeneinander liegenden Blasformen mit je einem eigenen Schließsystem auf einem gemeinsamen Transportsystem aufgeteilt ist.

## Beschreibung

Hohlkörper aus Kunststoff, z.B. Behälter für Flüssig- oder Schüttgut werden, sofern es sich nicht um die Herstellung von großen Hohlkörpern, z.B. Großgebinden in der Form von Kanistern oder Fässern handelt, meist auf sogenannten Hochleistungsblasmaschinen erzeugt. Darunter versteht man Maschinen mit einem hohen Ausstoß je Zeiteinheit und meist haben dann die Blasformen mehr als eine Kavität oder Formmulde nebeneinander, so daß nach Füllung der Blasform mit ausblasbaren Vorformlingen in einer entsprechend mit mehreren Blaseinrichtungen bestückten Blasstation mehrere Hohlkörper gleichzeitig ausgeblasen werden können. Hauptteile der Blaseinrichtungen sind häufig und vor allem für die Herstellung von Hohlkörpern mit einer Füll- und Entleerungsöffnung (Flaschen u. dgl.) Blasdorne, die mit dem Einschießen in den an einem Ende offenen Vorformling das Blasmedium einbringen und gleichzeitig die Füll- und Entleerungsöffnung mit ihrem Kalibrierteil durch Preßformen ausbilden. Es können für die Einführung des Blasmediums in den Vorformling, insbesondere für die Herstellung anderer Hohlkörper als Flaschen u.dgl., z.B. sogenannter technischer Teile, aber auch in den Vorformling eingestochene Blasnadeln verwendet werden. Nachfolgend sind aus Gründen der vereinfachten Beschreibung nur Blasdorne erwähnt.

Hierfür hat sich ein häufig "Wechselkalibrierung" genanntes System an sich bewährt, bei dem mit zwei Blasstationen gearbeitet wird, die gleich weit von einer zwischen diesen Blas- und gegebenenfalls Kalibrierstationen liegenden Schlauchstationen entfernt sind, in der von mehreren nebeneinander liegenden Schlauchköpfen oder von einer Schlauchkopfbatterie die erforderliche Zahl von Schläuchen nebeneinander erzeugt wird, die als Vorformlinge in eine unter dem Schlauchkopf bereitstehende Blasform eingebracht werden. Während eine Blasform unter der Schlauchkopfbatterie eine der Zahl der Kavitäten entsprechende Zahl von Vorformlingen aufnimmt, befindet sich unter einer ersten Blasstation eine zweite geschlossene Blasform, in der in je eine Kavität ein Blas- und Kalibrierdorn eingeschossen wird, mit dem die Halspartie eines Hohlkörpers, soweit es sich um einen Behälter mit Öffnung, z.B. eine Flasche, handelt, ausgeformt und der Restvorformling zum Hohlkörper aufgeblasen wird. Während dieser Phase ist der Platz unter der zweiten Blasstation frei. Wenn sich in der Schlauchstation die vorher geöffnete Blasform um die in entsprechende Länge aus den Schlauchkopfdüsen ausgepreßten Vorformlinge geschlossen hat und in der vorerwähnten ersten Blas- und Kalibrierstation die Hohlkörper fertig ausgeblasen und nach Öffnen der Blasform ausgebracht worden sind, die meist einer weiteren Behandlung zugeführt werden, wird die geschlossene Blasform mit den aufgenommenen Vorformlingen aus der Schlauchstation unter die andere Blasstation gefahren und die offene Blasform aus der vorher tätigen, ersten Blasstation unter die Schlauchstation, wonach sich der Füllvorgang in der Schlauchstation und der Ausformvorgang in der Blasstation wiederholt. Werden also zum Beispiel aus der Schlauchkopfbatterie vier Schläuche aus aufblasbarem plastischem Kunststoff erzeugt und parallel nebeneinander in die vier Kavitäten einer ersten Blasform eingeführt und werden gleichzeitig in einer Blasstation in der zweiten Form vier Hohlkörper ausgeblasen und anschließend in der ersten Form unter der zweiten Blasstation vier weitere Hohlkörper ausgeblasen, während gleichzeitig in der Schlauchstation vier neue Vorformlinge von der zweiten Blasform aufgenommen werden, werden in einem Zyklus acht Hohlkörper hergestellt, wenn eine Blasform vier Kavitäten besitzt. Dies ist natürlich nur ein Beispiel, gebräuchlich sind zwei und mehr Kavitäten in einer Blasform, fünf und sechs Kavitäten keine Seltenheit.

In der Praxis gehört aber zur Herstellung eines Hohlkörpers, z.B. einer Flasche oder eines technischen geblasenen Teils, so wie sie der Abnehmer verlangt, mehr als nur das Aufblasen des Vorformlings in der geschlossenen Blasform in der Blasstation. Wie allgemein bekannt, entstehen durch Überquetschungen des Vorformlings beim Formschluss im Halsbereich und am Boden eines Behälters oder sonstigen Gegenstandes Abfallteile, die, meist mechanisch, entfernt werden müssen. Häufig wird auch eine Prüfung der erzeugten Hohlkörper auf Dichtheit mit entsprechenden Prüfeinrichtungen verlangt und, ebenfalls nicht selten, sollen bereits in der Form Etiketten auf den Hohlkörper während dessen Erzeugung aufgebracht werden, ein Verfahren, das unter der Bezeichnung IML (inner mould labelling = Etikettieren in der Form) bekannt ist, um nur einige der möglichen zusätzlichen Behandlungsstufen zu nennen. Um aber derartige Nachbearbeitungsvorgänge, wie beispielsweise die Abfallentfernung und Dichtheitsprüfung, durchführen zu können, müssen die die Blasform verlassenden Hohlkörper ganz verfestigt sein, was eine sich an die Blasstationen anschließende Nachkühlstation erfordert. In solchen Fällen, die eher die Regel als die Ausnahme bilden, hat das mit je einer Blasstation rechts und links einer Schlauchstation arbeitende System der Wechselkalibrierung den Nachteil, daß jeder Blasstation eine entsprechende Vorrichtung, z.B. Nachkühlstation, Abfalltrennvorrichtung und/oder IML-Vorrichtung zugeordnet werden muß, wodurch die häufig zu Buch schlagende Überwachung einer Maschine erschwert wird und bei Stillstand auch nur einer Hilfsvorrichtung auf einer Seite die ganze Maschine zum Stillstand kommt.

Aus diesem Grunde sind Maschinen in den Handel gebracht worden, die nur nach einer Seite arbeiten, d.h. seitlich versetzt zu der Schlauchstation nur eine die Vorformlinge zu Hohlkörpern ausformende Blasstation aufweisen, und bei denen dann nur eine Blasform zwischen der Schlauchstation und der Blasstation hin- und hergefahren wird. In einem solchen Fall braucht man auch nur jeweils eine Hilfsvorrichtung und kann z.B. eine IML-Vorrichtung neben die Schlauchstation und eine Nachkühlstation und Abfalltrennvorrichtung neben die Blasstation plazieren. Allerdings müssen bei diesem System, sofern der Ausstoß je Zeiteinheit nicht verringert und damit die Vorteile der Wechselkalibrierung aufgegeben werden sollen, die bei der Wechselkalibrierung auf Blasformen verteilten Kavitäten in einer Blasform untergebracht werden, d.h. die Blasformen entsprechend lang gebaut werden. Eine Blasform mit acht Kavitäten für Flaschen eines Durchmessers von etwa 80 mm kann dann mehr als 1000 mm lang werden. Weil in diesem Fall eine große, d.h. lange Blasform aus dem Bereich der Schlauchstation in die Blasstation gefahren werden muß und entsprechend die Entfernung zwischen Schlauchstation und Blasstation etwas größer als die Länge einer Blasform sein muß, d.h. für die Verschiebung der Blasform aus der Schlauchstation in die Blasstation und zurück von der entsprechenden Verschiebeeinrichtung ein großer Hub bewältigt werden muß, nennt man diese Maschinen "Langhubmaschinen".

Die für Langhubmaschinen erforderlichen großen Blasformen mit einer Vielzahl von Kavitäten sind aber nur schwierig und d.h. kostspielig herzustellen und auch zu handhaben. Abgesehen vom erhöhten Gewicht erfordert das Einarbeiten von beispielsweise acht Kavitäten in die Formteile, aus denen die Form besteht, eine erheblich größere Genauigkeit als die Einarbeitung von je vier Kavitäten in eine Blasform, weil im ungünstigen Fall sich auch geringe Toleranzfehler zu in der Praxis merkbaren Fehlern summieren können. Außerdem wird mit zunehmender Größe einer Blasform mit einer Vielzahl von Formmulden oder Kavitäten der dichte Formschluß für den Aufblasvorgang in der Trennebene der Blasformteile ein zunehmend größeres Problem. Je mehr Kavitäten in einer langen Form untergebracht sind, desto genauer müssen die Formteile im Hinblick auf einen festen, dichten Formschluß bearbeitet werden, weil bei nicht völlig sattem und dichtem Formschluß über die gesamte Länge der Form in den beim Aufblavorgang mit Druck gegen die Kavitätenwand gepreßten Vorformlingen längs der Formtrennkanten Markierungen erzeugt werden, d.h. Ausschuß produziert wird. Auch die gleichmäßige Kraftverteilung auf die Blasform beim Schließvorgang ist bei langen Blasformen schwierig zu erzielen. Dies macht u.a. das Abquetschen überschüssigen Materials, z.B. bei Flaschen mit einem Handgriff, unsicher.

Als Nachteil wird ferner angesehen, daß der Maschinenkäufer von anderen bei ihm bereits stehenden Maschinen vorhandene Formen und Formspannplatten nicht mehr verwenden kann, sondern immer auf neue Spannplatten und neue große und teure Formen angewiesen ist.

Damit war es Aufgabe der Erfindung, eine Langhubmaschine zu schaffen, die die vorstehend erwähnten Nachteile vermeidet.

Zur Lösung dieser Aufgabe schlägt die Erifndung einer Maschine der im Oberbegriff des Anspruchs 1 definierten Gattung vor, die sich durch die im kennzeichnenden Teil dieses Anspruchs definierten Merkmale auszeichnet. Die Unteransprüche betreffen weitere mögliche Ausgestaltungen der Erfindung. Sie ist an einem Ausführungsbeispiel in den Zeichnungen dargestellt und anhand desselben nachfolgend beschrieben. Es stellen dar:
- Fig. 1: eine schematische Darstellung des Aufbauprinzips einer Maschine nach der Erfindung in der Seitenansicht und verkleinertem Maßstab;

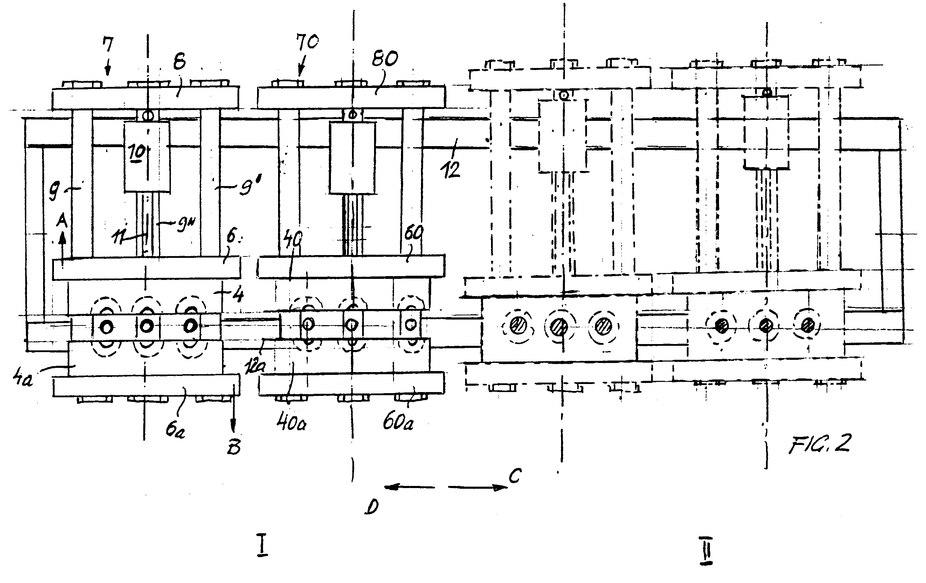

- Fig. 2: eine Aufsicht auf den Gegenstand der Fig. 1.

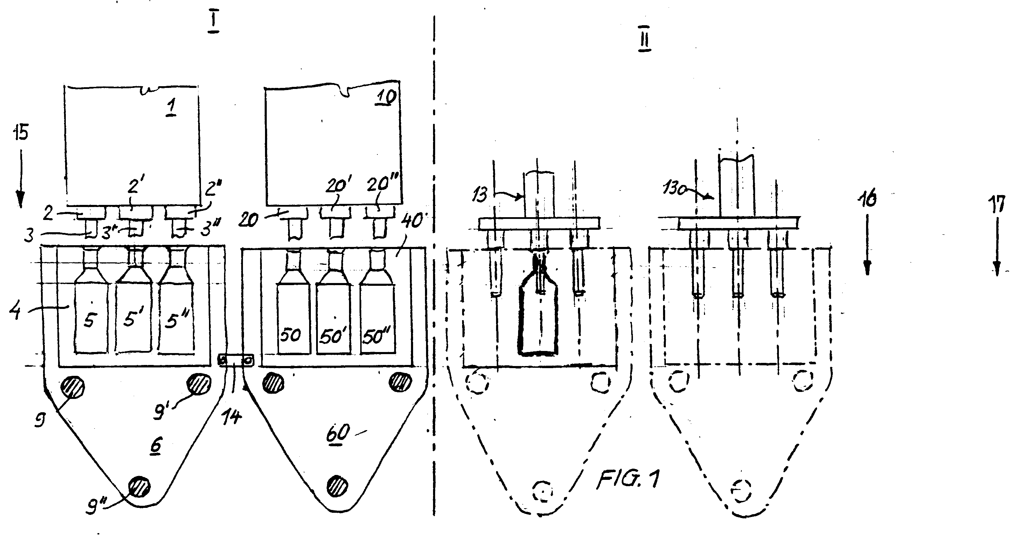

In Fig. 1 ist 1 eine an die Auspreßdüse eines -nicht dargestellten- Extruders angeschlossene Schlauchkopfbatterie, in der die aus dem Extruder ausgepreßten Kunststoffvollstränge umgewandelt werden. Das dargestellte Beispiel zeigt eine 3-fach Schlauchkopfbatterie, aus deren Düsen 2, 2', 2'' kontinuierlich oder diskontinierlich senkrecht nach unten parallel nebeneinander Schläuche 3, 3', 3'' austreten, die, in für die Verarbeitung in einer Blasform geeignete Längen geteilt, die Vorformlinge bilden. Nur aus Gründen der vereinfachten Darstellung ist eine drei Schläuche erzeugende Schlauchkopfbatterie dargestellt und dementsprechend eine Blasformhälfte 4 mit drei Kavitäten 5,5',5'', aber Blasformen mit vier und fünf Kavitäten, oder, in Abhängigkeit von der Größe der herzustellenden Hohlkörper, auch noch mehr Kavitäten, sind möglich. Ebenso sind lediglich wegen der vereinfachten und damit übersichtlicheren Darstellung in Fig. 1 in der Blasstation die Blasform-Kavitäten 5,50 weggelassen.

Die Blasformhälften 4, 4a sind in an sich bekannter Weise auswechselbar auf Trag- oder Spannplatten 6, 6a befestigt, die Teil eines bekannten, allgemein mit 7 bezeichneten Schließsystems sind. Bei dem dargestellten Beispiel gehört zum Schließsystem 7 ferner ein Querhaupt 8, das mit der Tragplatte 6a durch unterhalb der Blasform 4, 4a liegende Holme, z.B. drei Holme 9, 9', 9'', verbunden ist. Auf diesen Holmen ist die Tragplatte 6 mit Formhälfte 4 verschiebbar gelagert. Zwischen dem Querholm 8 und der Spannplatte 6 ist ein Schließmotor angeordnet, der mit einem Teil, z.B. mit einem Zylinder 10 am Querhaupt und mit seinem anderen Teil, z.B. der Kolbenstange 11, an der Spannplatte 6 befestigt ist. Mit dem Schließmotor kann über die Kolbenstange 11 die Spannplatte 6 und damit die Formhälfte zum Formöffnen in Pfeilrichtung A und über das Querhaupt 8 die Spannplatte 6a in Pfeilrichtung bewegt werden. Umgekehrt wird für den Formschluß mit dem Schließmotor 10, 11 die Spannplatte 6 in Pfeilrichtung B und die Spannplatte 6a in Pfeilrichtung A bewegt. Das vereinfacht dargestellte Schließsystem ist ein viel angewandtes bewährtes System, aber es gibt auch andere Arten von Schließsystemen. Welches dieser Systeme eingesetzt wird, ist für die Erfindung nicht wesentlich.

Erfindungsgemäß ist dicht neben der aus der Blasform 4, 4a und dem Schließsystem bestehenden Einheit mindestens eine, zweckmäßig gleich aufgebaute, aus der Blasform 40, 40a und dem Schließsystem 70 mit Tragplatten 60, 60a und dem Schließmotor 100, 110 bestehende Einheit angeordnet. Die Einheiten 7,70 sind zu einem Transportsystem vereinigt und in Pfeilrichtung C-D zusammen auf beliebige geeignete Weise, z.B. auf Schienen 12, zwischen der Schlauchstation I und der Blasstation II verschiebbar.

Durch die Aufteilung einer großen und langen Blasform mit vielen. z.B. acht oder zehn Kavitäten, in zwei Blafsormen mit z.B. je vier oder fünf Kavitäten, wird die Herstellung der Blasform erheblich weniger aufwendig und teuer. Die Schließsysteme 7,70 bilden also eine gleichzeitig arbeitende und zwischen der Schlauchstation I und der Blas- und Kalibrierstation II verfahrbare Einheit, so daß in jedem Zyklus z.B. 6, 8 oder 10 Hohlkörper hergestellt werden können, wobei der Benutzer bei ihm von Maschinen mit Wechselkalibrierung her vorhandene Formen und Spannplatten, gegebenenfalls ganze Schließsysteme, verwenden kann.

Bei dem dargestellten Beispiel ist jeder Blasform 4, 4a-40, 40a auch je eine Schlauchkopfbatterie 1,10 mit Düsen 2,20 zugeordnet, wodurch ebenfalls einfacher herzustellende und zu wartende sowie gegebenenfalls zu reparierende Einheiten gebildet werden.

Das gleiche gilt für das dargestellte Beispiel der Blas- und gegebenenfalls Kalibriervorrichtung 13 bzw. 130.

Die Schließsysteme 7,70 und, falls auch für jede Blasform 4,4a-40,40a je eine Schlauchkopfbatterie 1,10 und/oder eine Blasvorrichtung 13, 130 vorgesehen ist, auch diese, werden synchron gesteuert, jedoch ist ein Vor- oder Nacheilen gegenüber der anderen Einheit innerhalb einer geringen Zeitspanne unschädlich.

Durch die Pfeile 15 bis 17 ist schematisch veranschaulicht, wo z.B. eine Etikettiervorrichtung 15, eine Nachkühlstation 16 und eine Abfalltrennvorrichtung 17 liegen können.

Die Aufteilung einer langen Blasform mit vielen Formnestern oder Kavitäten in zwei- oder mehr- Blasformen mit einer entsprechenden jeweils geringeren Zahl von Kavitäten erlaubt es auch gleichzeitig mehrere, z.B. zwei oder drei Hohlkörperprogramme zu fahren. Es könnten also z.B. in einer Blsform drei Henkelflaschen, in einer zweiten Blasform vier demgegenüber kleinere Fläschchen und in einer dritten Blasform fünf Ampullen gleichzeitig erzeugt werden.

## Patentansprüche

1. Blasmaschine für die Herstellung von Hohlkörpern aus Kunststoff, die in einer Schlauchstation (I) mit mehreren, parallel nebeneinander liegenden Schlauchköpfen oder einer Schlauchkopfbatterie Vorformlinge erzeugt, mit denen in dieser Station (I) eine in ein Schließsystem integrierte Blasform, mit mehreren, der Zahl der Vorformlinge entsprechenden Kavitäten gefüllt wird, welche Vorformlinge in einer versetzt zur Schlauchstation liegenden Blasstation (II) in der geschlossenen Blasform zu Hohlkörpern aufgeblasen werden (Langhubsystem),
dadurch **gekennzeichnet**, daß die Blasform in mindestens zwei, dicht nebeneinander liegende Blasformen (4, 40) mit je einem eigenen Schließsystem (7, 70) auf einem gemeinsamen Transportsystem (12) aufgeteilt ist.

2. Blasmaschine nach Anspruch 1,
dadurch **gekennzeichnet,** daß in der Schlauchstation (I) zu jeder Blasform (4, 40) auch je eine der Zahl der Formkavitäten entsprechende Zahl von Schlauchköpfen oder eine Schlauchkopfbatterie (1, 10) gehört.

3. Maschine nach dem Anspruch 1,
dadurch **gekennzeichnet,** daß in der Blasstation (II) zu jeder Blasform (4, 40) auch je eine Blas- und gegebenenfalls Kalibrierstation (13, 130) gehört.
